# EUROPEAN PATENT APPLICATION

(11) **EP 4 819 694 A1**
(43) Date of publication of application: **07.10.2026**
(21) Application number: 25168128.4
(22) Date of filing: 02.04.2025
(51) Int. Cl.: H04W 48/10, H04W 24/02

(54) **GENERALISED ANR SOLUTION FOR HANDLING NEIGHBOUR CELL RELATIONS UPDATES**

(71) Applicant: Nokia Technologies Oy, 02610 Espoo (FI)
(72) Inventor: KOSKELA, Jarkko Tuomo, 90510 Oulu (FI); Koskinen, Jussi-Pekka, 90420 Oulu (FI)
(74) Representative: Bryers Intellectual Property Ltd

(57) **Abstract**

In some example, a user equipment comprises at least one processor, and at least one memory comprising instructions that, when executed by the at least one processor, cause the user equipment at least to receive, from a serving cell, a request to report a message from a neighbour cell, wherein the request indicates that any portion of the message that the UE is able to decode is to be reported in a decoded format, and any portion that the UE is not able to decode is to be reported in an undecoded format, obtain the message from the neighbour cell, and report the message to the serving cell such that at least one portion is forwarded in a decoded format and at least one portion is forwarded in an undecoded format.

## Description

### Technical Field

The present disclosure relates, in general, to reporting of information acquired from neighbouring cells in a wireless communication network. Aspects of the disclosure relate to techniques enabling a user equipment (UE) to forward messages from a neighbour cell to a serving cell, even when certain parameters in those messages may be unsupported or only partially supported by the UE.

### Background

In current wireless communication systems, a user equipment (UE) can be configured to gather information about neighbouring cells and report it to a serving cell for various network management purposes, such as automatic neighbour relation (ANR) functionality. Typically, the UE is expected to read and decode broadcast system information from a neighbour cell, extract relevant fields (e.g., cell identity), and then send a decoded report to the serving cell. This approach works adequately when the UE fully supports the same radio access network (RAN) release as the neighbour cell and can decode all relevant fields.

However, in certain deployments-particularly those involving newer RAN releases-some fields or parameters may be introduced that an older-release UE cannot recognise or decode. For example, if a newer release specifies additional indicators (such as high-speed dedicated network, HSDN, information) in the broadcast messages, a UE operating on an earlier release may be unable to decode or even properly parse those new fields. In such scenarios, existing solutions often restrict the UE to reporting only the information it can decode, which means potentially valuable data about the neighbour cell (including newer parameters) remains unreported. This leads to incomplete neighbour cell information at the serving cell, complicating network management and forcing manual updates to neighbour cell lists.

Moreover, because of the wide range of RAN releases in practical networks, operators face difficulties maintaining interoperability between legacy UEs and advanced network features. If the UE lacks the capability to forward or partially forward messages containing new parameters, the network cannot leverage advanced features from these newer releases. Consequently, certain network optimisations, such as improved ANR, are not fully realised, and operators may need to resort to more labour-intensive or less flexible approaches.

In addition, reliance on the UE's decoding capabilities alone can limit the adaptability and future-proofness of the system. As network standards evolve, so too do the broadcast messages and their contents. Without an adequate mechanism for older UEs to handle new message elements, operators are forced to undertake network reconfigurations or rely on a smaller subset of features to maintain backward compatibility.

There is therefore a need for a solution that addresses these shortcomings by allowing the UE to provide relevant neighbour cell information to the serving cell, even if the UE cannot decode all (or any) parts of the message, without complicating or breaking backward compatibility.

### Summary

An objective of the present disclosure is to provide a mechanism enabling the UE to provide relevant neighbour cell information to the serving cell, even if the UE cannot decode a part of or the entirety of the message.

The foregoing and other objectives are achieved by the features of the independent claims.

Further implementation forms are apparent from the dependent claims, the description and the Figures.

A first aspect of the present disclosure provides a user equipment, UE, comprising at least one processor, and at least one memory comprising instructions that, when executed by the at least one processor, cause the user equipment at least to receive, from a serving cell, a request to report a message from a neighbour cell, wherein the request indicates that any portion of the message that the UE is able to decode is to be reported in a decoded format, and any portion that the UE is not able to decode is to be reported in an undecoded format, obtain the message from the neighbour cell, and report the message to the serving cell such that at least one portion is forwarded in a decoded format and at least one portion is forwarded in an undecoded format.

In an implementation of the first aspect, the request can indicate that the message is related to at least one parameter of a radio access network release not supported by the UE, such that the UE is instructed to forward that parameter in an undecoded format. The message can comprise at least one encoded Abstract Syntax Notation.1, ASN.1, structure, and that the UE can be configured to report any unsupported part of the ASN.1 structure in an undecoded format. The at least one processor can be configured to obtain the message by receiving a broadcasted system information message or a user-specific message from the neighbour cell, or by transmitting a request to the neighbour cell to provide the message. The at least one processor can be further configured to transmit an indication to the serving cell if the message cannot be obtained within a predetermined time limit. The at least one processor can be configured to include, in the report, an indication of a time of reception or validity of the message. The at least one processor can be configured to store the message and, upon receiving the request, report the stored message to the serving cell.

A second aspect of the present disclosure provides a method, performed by a user equipment, the method comprising receiving, from a serving cell, a request to report a message from a neighbour cell, wherein the request indicates that any portion of the message that the UE is able to decode is to be reported in a decoded format, and any portion that the UE is not able to decode is to be reported in an undecoded format, obtaining the message from the neighbour cell, and reporting the message to the serving cell such that at least one portion is forwarded in a decoded format and at least one portion is forwarded in an undecoded format.

In an implementation of the second aspect, the request can indicate that the message is related to at least one parameter of a radio access network release not supported by the UE, such that the UE is instructed to forward that parameter in an undecoded format. The message can comprise at least one encoded Abstract Syntax Notation.1, ASN.1, structure, and that the UE is configured to report any unsupported part of the ASN.1 structure in an undecoded format. Obtaining the message can comprise receiving a broadcasted system information message or a user-specific message from the neighbour cell, or requesting the neighbour cell to provide the message prior to receiving the message. The method can further comprise transmitting an indication to the serving cell if the message cannot be obtained within a predetermined time limit.

A third aspect of the present disclosure provides a serving cell comprising at least one processor, and at least one memory comprising instructions that, when executed by the at least one processor, cause the serving cell at least to send, to a user equipment, UE, a request to report a message from a neighbour cell, wherein the request indicates that any portion of the message that the UE is able to decode is to be reported in a decoded format, and any portion that the UE is not able to decode is to be reported in an undecoded format, and receive the message from the UE such that at least one portion is forwarded in a decoded format and at least one portion is forwarded in an undecoded format.

A fourth aspect of the present disclosure provides a method, performed by a serving cell, the method comprising sending, to a user equipment, UE, a request to report a message from a neighbour cell, wherein the request indicates that any portion of the message that the UE is able to decode is to be reported in a decoded format, and any portion that the UE is not able to decode is to be reported in an undecoded format, and receiving the message from the UE such that at least one portion is forwarded in a decoded format and at least one portion is forwarded in an undecoded format.

A fifth aspect of the present disclosure provides a non-transitory computer-readable medium storing instructions which, when executed by one or more processors of a user equipment, UE, cause the UE to receive, from a serving cell, a request to report a message from a neighbour cell, wherein the request indicates that any portion of the message that the UE is able to decode is to be reported in a decoded format, and any portion that the UE is not able to decode is to be reported in an undecoded format, obtain the message from the neighbour cell, and report the message to the serving cell such that at least one portion is forwarded in a decoded format and at least one portion is forwarded in an undecoded format.

These and other aspects of the invention will be apparent from the embodiment(s) described below.

### Brief Description of the Drawings

In order that the present invention may be more readily understood, embodiments of the invention will now be described, by way of example, with reference to the accompanying drawings, in which:
Figure 1 is a schematic representation of an automatic neighbour relation function to aid understanding of the invention;
Figure 2 is a flow chart of a method according to an example;
Figure 3 is a schematic representation of a method according to an example;
Figure 4 is a schematic representation of a user equipment (UE) according to an example;
Figure 5 is a schematic representation of a serving cell according to an example; and
Figure 6 is a flow chart of a method according to another example.

### Detailed Description

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Examples in the present disclosure can be provided as methods, systems or machine-readable instructions, such as any combination of software, hardware, firmware or the like. Such machine-readable instructions may be included on a computer readable storage medium (including but not limited to disc storage, CD-ROM, optical storage, etc.) having computer readable program codes therein or thereon.

The present disclosure is described with reference to flow charts and/or block diagrams of the method, devices and systems according to examples of the present disclosure. Although the flow diagrams described above show a specific order of execution, the order of execution may differ from that which is depicted. Blocks described in relation to one flow chart may be combined with those of another flow chart. In some examples, some blocks of the flow diagrams may not be necessary and/or additional blocks may be added. It shall be understood that each flow and/or block in the flow charts and/or block diagrams, as well as combinations of the flows and/or diagrams in the flow charts and/or block diagrams can be realized by machine readable instructions.

The machine-readable instructions may, for example, be executed by a machine such as a general-purpose computer, user equipment such as a smart device, e.g., a smart phone, a special purpose computer, an embedded processor or processors of other programmable data processing devices to realize the functions described in the description and diagrams. In particular, a processor or processing apparatus may execute the machine-readable instructions. Thus, modules of apparatus (for example, a module implementing a comparator unit, or a firewall structure and so on) may be implemented by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate set etc. The methods and modules may all be performed by a single processor or divided amongst several processors.

Such machine-readable instructions may also be stored in a computer readable storage that can guide the computer or other programmable data processing devices to operate in a specific mode. For example, the instructions may be provided on a non-transitory computer readable storage medium encoded with instructions, executable by a processor.

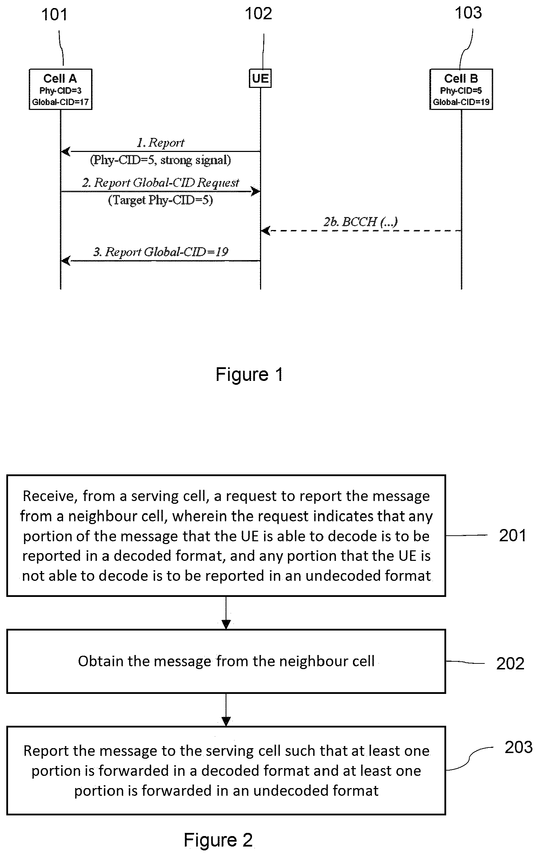

Figure 1 is a schematic representation of an automatic neighbour relation function to aid understanding of the invention. In the illustrated example, Cell A 101 is the serving cell, Cell B 103 is a neighbour cell, and a user equipment (UE) 102 is depicted in communication with Cell A. Cell A 101 may be part of a Next Generation Radio Access Network (NG-RAN), which generally refers to a 5G (or later) network architecture that supports enhanced radio technologies and protocols.

In the shown scenario, the UE 102 is in an RRC_CONNECTED state. This state (radio resource control connected) enables the network to actively manage and exchange signalling with the UE 102, including sending instructions to perform measurements on neighbour cells. The serving cell (Cell A, 101) includes or is associated with an automatic neighbour relation (ANR) function, which is responsible for discovering, adding, and updating neighbour cell information in order to optimise handovers and network performance.

As part of the ANR procedure, the serving cell (Cell A, 101) may configure the UE 102 to measure one or more neighbour cells based on predefined or dynamically updated network policies. For example, the serving cell might instruct the UE 102 to measure the signal quality of Cell B 103, or to acquire certain system information blocks (SIBs) broadcast by Cell B 103. The UE 102 then performs these measurements or acquires the requested information. If required, the UE 102 can report the results back to Cell A 101. This report may include details such as the neighbour cell's physical cell identifier (PCI), global cell identifier (GCI), or other parameters specified in the relevant 3GPP standards.

In some implementations, the ANR function within the serving cell (Cell A, 101) uses these reports to update its neighbour cell list automatically, which helps maintain efficient mobility management and improves overall network performance. Different operator policies may govern how frequently the UE 102 is instructed to perform measurements, how the results are filtered, and when the UE 102 must send the measurement or system information reports back to Cell A 101.

Figure 1 thus depicts a high-level flow in which:
- the UE 102 operates in RRC_CONNECTED with Cell A 101,
- Cell A 101, via the NG-RAN infrastructure, instructs the UE 102 to measure or retrieve information from Cell B 103,
- the UE 102 acquires the requested data from Cell B 103,
- the UE 102 reports back to Cell A 101, enabling Cell A's ANR function to update or confirm neighbour relations.

Although Figure 1 presents one example arrangement, other variations are possible. For instance, there may be multiple neighbour cells, additional steps to validate measurement results, or different triggers (e.g., signal strength thresholds) for initiating the neighbour cell measurements.

It is anticipated that an ANR type of solution will be required in sixth-generation (6G) networks. Experience with fifth-generation (5G) systems has shown that new requests often arise to incorporate additional fields or parameters for reporting to the network. If such additions are introduced only at a later stage, there is a significant risk that either no user equipment or only a small proportion of UEs will support the new reporting requirements. Consequently, it is desirable to establish a more generalised solution from the outset of 6G development, one that can readily accommodate future additions or modifications, thereby ensuring wider and more flexible support for new parameters.

Figure 2 is a flow chart of a method according to an example. The method comprises, in block 201, receiving, from a serving cell, a request to report the message from a neighbouring cell.

The message from the neighbouring cell may comprise at least one encoded Abstract Syntax Notation.1 (ASN.1) structure, where "ASN.1" refers to a standard notation that describes data structures for representing, encoding, transmitting, and decoding information in telecommunications protocols. By way of example, such an ASN.1 structure may include one or more SIBs, or additional parameters introduced in newer releases (e.g. high-speed dedicated network, HSDN, indicators).

In an embodiment, the request indicates that the entire message is to be forwarded (i.e., reported) in an unprocessed form, such that no portion of the message is decoded by the UE. As used herein, the expression "unprocessed" may relate to transmitting the message in the exact format in which it was received, without performing any decoding, interpretation, or alteration of the data content.

In typical implementations, the UE might attempt to decode system information or other broadcast messages to extract fields for reporting. However, when the request specifies forwarding in an unprocessed form, the UE refrains from parsing or interpreting any part of the message, instead simply forwarding the message as is.

According to an example, an entire message, otherwise referred to as the entirety of a message, can be a system information message (e.g. a master information block, a system information block, e.g. SIB1, SIB2, SIB3, SIB4, ..., or a combination thereof, or another broadcasted element), a user-specific message, but not a particular subset of data fields within a larger message, e.g. not only one encoded Abstract Syntax Notation.1, ASN.1, structure, not a single parameter of a message, and not a single radio resource control information element.

For example, a serving cell can be in connection with a Release 16 UE and the serving cell knows from this that the UE does not support and cannot read Release 17 parameters. In case the serving cell is interested in Rel. 17 parameters from a neighbour cell of the UE, the serving cell can request that the UE with which it is in connection sends, e.g., the complete SIB1 received from neighbour X, SIB1 may include HSDN information that the serving cell is interested in, e.g.:
In TS 38.331 v18.2.0, the HSDN indication can, e.g., be included in following SIB1:
- SIB1: HSDN indication for the serving cell, i.e. hsdn-Cell-r17 HSDN info may alternatively be included in SIB3 or SIB4:
- SIB3: HSDN indication for the intra-frequency neighbouring cell(s), i.e. intraFreqNeighHSDN-CellList-r17
- SIB4: HSDN indication for the inter-frequency neighbouring cell(s), i.e. interFreqNeighHSDN-CellList-r17

The serving cell may request that the UE sends the complete SIB3 and/or complete SIB4 received from neighbour X dependent on where the information the serving cell is interested is located or included in.

The serving cell can then, e.g., receive the complete SIB1 message from the UE and, using a UE Release 17 decoder, the serving cell can decode SIB1 and extract, e.g., HSDN information.

Alternatively, the serving cell may include an actual version of a UE decoder of the most recent 3GPP release, e.g. Release 17, 18, 19, 20, ... to enable decoding of messages. Dependent on the release supported by the neighbour cell, e.g. Release X, the serving cell may receive respective SIB1 release X information.

In a different embodiment, the request indicates that any portion of the message that the UE is able to decode is to be reported (i.e., forwarded) in a decoded format, and any portion that the UE is not able to decode is to be reported in an undecoded format. As used herein, the expression "undecoded" means that the UE does not interpret or parse those fields, for instance, because they relate to a parameter introduced in a later radio access network release that the UE does not support.

In other words, the UE may partially decode the message if it supports or recognises certain fields, while leaving any unsupported or unrecognised fields in their original encoded form. Consequently, the UE could report some elements in a conventional decoded format (e.g. cell IDs it understands), while forwarding newly introduced parameters (e.g. HSDN indication fields) as raw data.

The request to report the message from the neighbouring cell may indicate that the message is related to at least one parameter of a radio access network (RAN) not supported by the UE, and that the at least one parameter is to be reported in an undecoded format if the UE does not support or is not successful in decoding the parameter. For instance, a newer 3GPP release might introduce additional fields for ANR or HSDN, which an earlier-release UE is unable to decode fully. In such a scenario, the UE still forwards these fields in raw form, allowing the serving cell to decode them if it supports the relevant release.

The method may further comprise storing the message before receiving the request, and reporting the stored message upon receiving the request from the serving cell. Such storage may occur if, for example, the UE previously camped on the neighbouring cell and automatically received or cached the relevant system information. In this way, even if the UE only later receives the request from the serving cell, it can retrieve the previously stored message and forward it accordingly.

In block 202, the method comprises obtaining the message from the neighbour cell.

Obtaining the message from the neighbour cell may involve reading broadcast system information (such as a SIB) while the UE monitors the neighbour cell's transmissions, or it may involve actively requesting the neighbour cell to provide specific information (e.g. certain RRC or MAC messages). Additionally, as discussed above, the UE might use previously cached data if it has already acquired and stored the neighbour cell's message.

The method comprises, in block 203, reporting the message to the serving cell.

If the request indicated that the entire message is to be reported in an unprocessed form, the message is reported to the serving cell without decoding the message. For example, a legacy UE might receive a SIB containing new parameters related to HSDN. Because the UE cannot parse these newer fields, it forwards the entire SIB in its original ASN.1 encoding to the serving cell.

If the request indicated that any portion of the message that the UE is able to decode is to be reported in a decoded format, and any portion that the UE is not able to decode is to be reported in an undecoded format, the message is reported to the serving cell such that at least one portion is forwarded in a decoded format, and at least one portion is forwarded in an undecoded format. For instance, a UE may decode known fields such as the cell's global identity, while leaving unfamiliar parameters-introduced in a later release-in raw ASN.1 format. The serving cell can then decode or interpret those additional parameters if it supports the relevant release.

Reporting the message may comprise indicating a time of reception or validity of the message.

The method may further comprise transmitting an indication to the serving cell if the message cannot be obtained within a predetermined time limit.

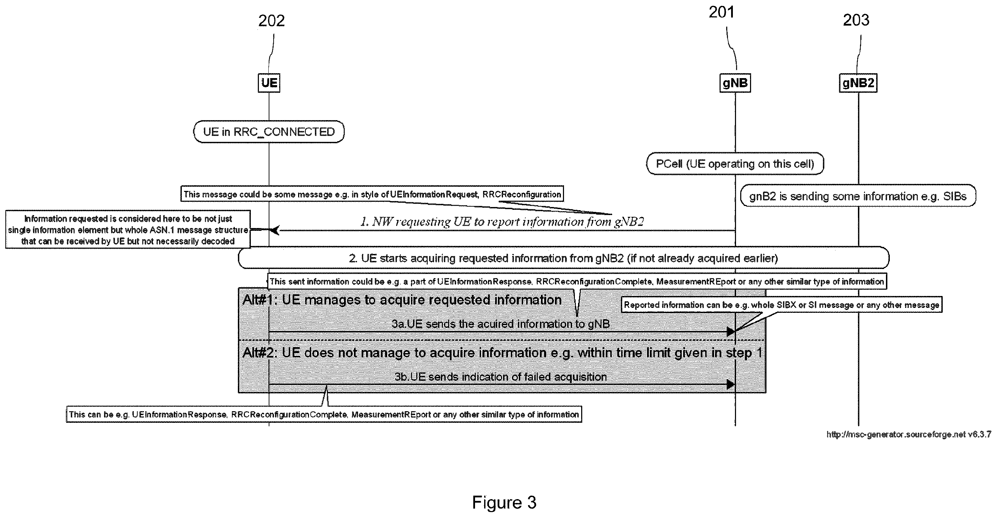

Figure 3 is a schematic representation of a method according to an example. In this illustration, gNB 301 and gNB2 303 may each represent a base station (or gNB) in a wireless communication network, wherein one of them operates as a serving cell and the other as a neighbour cell. For instance, gNB 301 can be the serving cell and gNB2 303 can be the neighbour cell; however, in other implementations, gNB2 303 may instead be the serving cell while gNB 301 acts as the neighbour cell. A UE 302 communicates with one of these gNBs in an RRC_CONNECTED state (or an equivalent connected mode), allowing the network to send commands and receive reports from the UE.

The method shown in Figure 3 involves the network-through the serving gNB-requesting the UE 302 to obtain and report certain information (herein referred to as *"messageX'*) from the neighbour gNB.

By way of example, the serving gNB (301 or 303, depending on the role) may transmit a request instructing the UE 302 to acquire *messageX* from the other gNB, which is operating as the neighbour cell. This *messageX* can be a system information message (e.g. a master information block, a system information block, or another broadcasted element), a user-specific message, or even a particular subset of data fields within a larger message.

Then, the UE 302 may attempt to read (or otherwise obtain) *messageX* from the neighbour gNB. This may involve listening to broadcast transmissions from the neighbour cell, issuing a dedicated request to the neighbour gNB for the specific information, or retrieving the information from a local cache if the UE has previously stored it (e.g. from an earlier camping period on that neighbour cell).

If the UE 302 successfully acquires messageX, the UE 302 may forward the requested data to the serving gNB. The UE may report the entire message or only certain segments, depending on the network's request. Where the UE 302 is unable to acquire *messageX* (for instance, if the neighbour cell's signal is too weak or the relevant parameters cannot be decoded), the UE 302 may send an indication of failure or simply refrain from reporting, as determined by the network's configuration.

In certain implementations, the UE 302 may be given a maximum time to obtain and report *messageX.* If this timer expires, the UE 302 can either terminate the attempt or notify the serving gNB that it could not retrieve the requested information. Additionally, the UE 302 might provide supplementary details, such as the time at which *messageX* was acquired or a validity indicator for the data, enabling the serving gNB to assess whether the information is current.

Advantageously, by allowing the UE to report entire messages, or portions thereof, without necessarily needing to decode every field, the network can capture parameters that may be unsupported by older-release UEs. This helps ensure backwards compatibility: even if future releases introduce new fields into *messageX,* a UE that does not support these fields can still forward them in raw form to the serving gNB, which can then decode and use them if it supports the newer release.

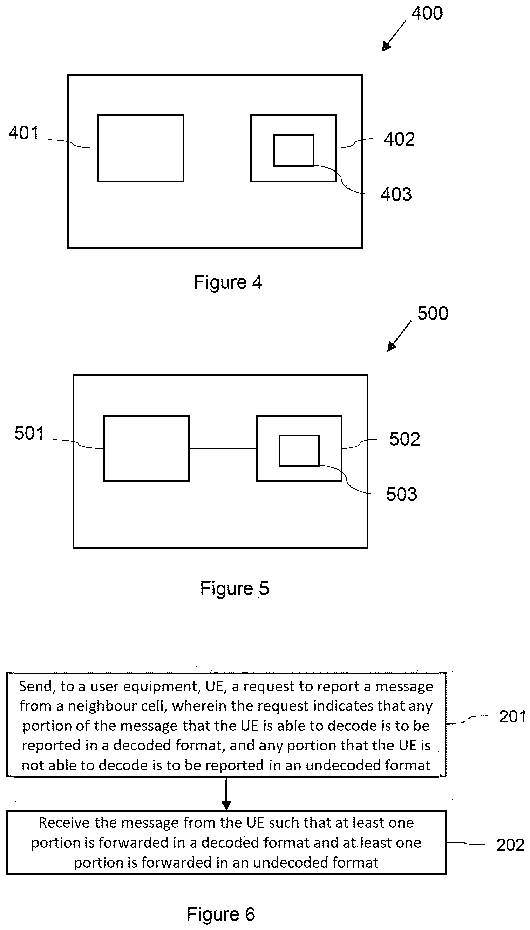

Figure 4 is a schematic representation of a user equipment (UE) according to an example. The UE 400 comprises at least one processor 401 and at least one memory 402, comprising instructions 403 that, when executed by the processor 401, cause the UE 400 to perform the method described herein in relation to Figures 2 and 3.

Figure 5 is a schematic representation of a serving cell according to an example. The serving cell 500 comprises at least one processor 501 and at least one memory 502, comprising instructions 503 that, when executed by the processor 501, cause the serving cell 500 to perform the method described herein, for example, in relation to Figure 6.

Figure 6 is a flow chart of a method according to another example. In block 601, the method comprises sending, to a user equipment, UE, a request to report a message from a neighbour cell, wherein the request indicates that any portion of the message that the UE is able to decode is to be reported in a decoded format, and any portion that the UE is not able to decode is to be reported in an undecoded format. In block 602, the method comprises receiving the message from the UE such that at least one portion is forwarded in a decoded format and at least one portion is forwarded in an undecoded format.

Additional embodiments comprise a user equipment comprising at least one processor, and at least one memory comprising instructions that, when executed by the at least one processor, cause the user equipment at least to receive, from a serving cell, a request to report a message from a neighbour cell. The request can indicate that the entirety of a message is to be forwarded in an unprocessed form. In an example, no portion of the message is decoded by the UE. The UE can obtain the message from the neighbour cell, and report the message to the serving cell. Reporting may be done without decoding the message.

The request may indicate that the message is related to at least one parameter of a radio access network release not supported by the UE, and that the at least one parameter is to be reported in an undecoded format if the UE does not support or is not successful in decoding the parameter.

The message may comprise at least one encoded Abstract Syntax Notation.1, ASN.1, structure.

The at least one processor may be configured to obtain the message by receiving a broadcasted system information message or a user-specific message from the neighbour cell, or by transmitting a request to the neighbour cell to provide the message.

The at least one processor may be further configured to transmit an indication to the serving cell if the message cannot be obtained within a predetermined time limit.

The at least one processor may be configured to include, in the report, an indication of a time of reception or validity of the message.

The at least one processor may be configured to store the message and, upon receiving the request, report the stored message to the serving cell.

Additional embodiments comprise a method comprising receiving, from a serving cell, a request to report a message from a neighbour cell. The request can indicate that the entirety of a message is to be forwarded in an unprocessed form. In an example, no portion of the message is decoded by the UE. The method can comprise obtaining the message from the neighbour cell, and reporting the message to the serving cell. The reporting can be done without decoding the message.

The request may indicate that the message is related to at least one parameter of a radio access network release not supported by the UE, and that the at least one parameter is to be reported in an undecoded format if the UE does not support or is not successful in decoding the parameter.

The message may comprise at least one encoded Abstract Syntax Notation.1, ASN.1, structure.

Obtaining the message may comprise receiving a broadcasted system information message or a user-specific message from the neighbour cell, or requesting the neighbour cell to provide the message prior to receiving the message.

The method may further comprise transmitting an indication to the serving cell if the message cannot be obtained within a predetermined time limit.

Additional embodiments comprise a serving cell comprising at least one processor, and at least one memory comprising instructions that, when executed by the at least one processor, cause the serving cell at least to send, to a user equipment, UE, a request to report a message from a neighbour cell. The request can indicate that the entire message is to be forwarded in an unprocessed form. In an example, no portion of the message is decoded by the UE. The serving cell can receive the message from the UE. The message can be received without the UE having decoded the message.

Additional embodiments comprise a method, performed by a serving cell, the method comprising sending, to a user equipment, UE, a request to report a message from a neighbour cell. The request can indicate that the entire message is to be forwarded in an unprocessed form. In an example, no portion of the message is decoded by the UE. The method can comprise receiving the message from the UE. The receiving can be done without the UE having decoded the message.

Additional embodiments comprise a non-transitory computer-readable medium storing instructions which, when executed by one or more processors of a user equipment, UE, cause the UE to receive, from a serving cell, a request to report a message from a neighbour cell. The request can indicate that the entire message is to be forwarded in an unprocessed form. In an example, no portion of the message is decoded by the UE. The UE can obtain the message from the neighbour cell, and report the message to the serving cell. The reporting can be done without decoding the message.

According to an example, machine-readable instructions can be loaded onto a computer or other programmable data processing devices, so that the computer or other programmable data processing devices perform a series of operations to produce computer-implemented processing, thus the instructions executed on the computer or other programmable devices provide an operation for realizing functions specified by flow(s) in the flow charts and/or block(s) in the block diagrams.

Further, the teachings herein may be implemented in the form of a computer or software product, such as a non-transitory machine-readable storage medium, the computer software or product being stored in a storage medium and comprising a plurality of instructions, e.g., machine readable instructions, for making a computer device implement the methods recited in the examples of the present disclosure.

In some examples, some methods can be performed in a cloud-computing or network-based environment. Cloud-computing environments may provide various services and applications via the Internet. These cloud-based services (e.g., software as a service, platform as a service, infrastructure as a service, etc.) may be accessible through a web browser or other remote interface of the user equipment for example. Various functions described herein may be provided through a remote desktop environment or any other cloud-based computing environment.

While various embodiments have been described and/or illustrated herein in the context of fully functional computing systems, one or more of these exemplary embodiments may be distributed as a program product in a variety of forms, regardless of the particular type of computer-readable-storage media used to actually carry out the distribution. The embodiments disclosed herein may also be implemented using software modules that perform certain tasks. These software modules may include script, batch, or other executable files that may be stored on a computer-readable storage medium or in a computing system. In some embodiments, these software modules may configure a computing system to perform one or more of the exemplary embodiments disclosed herein. In addition, one or more of the modules described herein may transform data, physical devices, and/or representations of physical devices from one form to another.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the instant disclosure. The embodiments disclosed herein should be considered in all respects illustrative and not restrictive. Reference should be made to the appended claims and their equivalents in determining the scope of the instant disclosure.

## Claims

1. A user equipment, UE, (400) comprising:
at least one processor (401); and
at least one memory (402) comprising instructions (403) that, when executed by the at least one processor (401), cause the user equipment (400) at least to:
receive, from a serving cell, a request to report a message from a neighbour cell, wherein the request indicates that any portion of the message that the UE (400) is able to decode is to be reported in a decoded format, and any portion that the UE (400) is not able to decode is to be reported in an undecoded format;
obtain the message from the neighbour cell; and
report the message to the serving cell such that at least one portion is forwarded in a decoded format and at least one portion is forwarded in an undecoded format.

2. The user equipment (400) of claim 1, wherein the request indicates that the message is related to at least one parameter of a radio access network release not supported by the UE, such that the UE is instructed to forward that parameter in an undecoded format.

3. The user equipment (400) of claim 1 or 2, wherein the message comprises at least one encoded Abstract Syntax Notation.1, ASN.1, structure, and that the UE (400) is configured to report any unsupported part of the ASN.1 structure in an undecoded format.

4. The user equipment (400) of any one of claims 1 to 3, wherein the at least one processor (401) is configured to obtain the message by receiving a broadcasted system information message or a user-specific message from the neighbour cell, or by transmitting a request to the neighbour cell to provide the message.

5. The user equipment (400) of any one of claims 1 to 4, wherein the at least one processor (401) is further configured to transmit an indication to the serving cell if the message cannot be obtained within a predetermined time limit.

6. The user equipment (400) of any one of claims 1 to 5, wherein the at least one processor (401) is configured to include, in the report, an indication of a time of reception or validity of the message.

7. The user equipment (400) of any one of claims 1 to 6, wherein the at least one processor (401) is configured to store the message and, upon receiving the request, report the stored message to the serving cell.

8. A method, performed by a user equipment, the method comprising:
receiving, from a serving cell, a request to report a message from a neighbour cell, wherein the request indicates that any portion of the message that the UE is able to decode is to be reported in a decoded format, and any portion that the UE is not able to decode is to be reported in an undecoded format (201);
obtaining the message from the neighbour cell (202); and
reporting the message to the serving cell such that at least one portion is forwarded in a decoded format and at least one portion is forwarded in an undecoded format (203).

9. The method of claim 8, wherein the request indicates that the message is related to at least one parameter of a radio access network release not supported by the UE, such that the UE is instructed to forward that parameter in an undecoded format.

10. The method of claim 8 or 9, wherein the message comprises at least one encoded Abstract Syntax Notation.1, ASN.1, structure, and that the UE is configured to report any unsupported part of the ASN.1 structure in an undecoded format

11. The method of claim 8, 9 or 10, wherein obtaining the message (202) comprises receiving a broadcasted system information message or a user-specific message from the neighbour cell, or requesting the neighbour cell to provide the message prior to receiving the message.

12. The method of any one of claims 8 to 11, further comprising:
transmitting an indication to the serving cell if the message cannot be obtained within a predetermined time limit.

13. A serving cell (500) comprising:
at least one processor (501); and
at least one memory (502) comprising instructions (503) that, when executed by the at least one processor (501), cause the serving cell (500) at least to:
send, to a user equipment, UE, a request to report a message from a neighbour cell, wherein the request indicates that any portion of the message that the UE is able to decode is to be reported in a decoded format, and any portion that the UE is not able to decode is to be reported in an undecoded format; and
receive the message from the UE such that at least one portion is forwarded in a decoded format and at least one portion is forwarded in an undecoded format.

14. A method, performed by a serving cell, the method comprising:
sending, to a user equipment, UE, a request to report a message from a neighbour cell, wherein the request indicates that any portion of the message that the UE is able to decode is to be reported in a decoded format, and any portion that the UE is not able to decode is to be reported in an undecoded format (601); and
receiving the message from the UE such that at least one portion is forwarded in a decoded format and at least one portion is forwarded in an undecoded format (602).

15. A non-transitory computer-readable medium storing instructions which, when executed by one or more processors of a user equipment, UE, cause the UE to:
receive, from a serving cell, a request to report a message from a neighbour cell, wherein the request indicates that any portion of the message that the UE is able to decode is to be reported in a decoded format, and any portion that the UE is not able to decode is to be reported in an undecoded format;
obtain the message from the neighbour cell; and
report the message to the serving cell such that at least one portion is forwarded in a decoded format and at least one portion is forwarded in an undecoded format.
